# EUROPÄISCHE PATENTANMELDUNG

(11) **EP 0 665 054 A1**
(43) Veröffentlichungstag der Anmeldung: **02.08.1995**
(21) Anmeldenummer: 94119476.3
(22) Anmeldetag: 09.12.1994
(51) Int. Cl.: B01J 20/28, G01N 33/94, C12Q 1/24

(54) **Adsorbermaterial zur Anreicherung und Gewinnung von Spurenstoffen aus der Gasphase**

(30) Priorität: 27.01.1994 DE 4402377
(71) Anmelder: SECURETEC GmbH, D-85521 Ottobrunn (DE); BOEHRINGER MANNHEIM GMBH, D-68305 Mannheim (DE)
(72) Erfinder: Oberpreller, Helmut, D-83620 Feldkirchen (DE); Hilpert, Reinhold, Dr., D-82272 Moorenweis (DE); Binder, Florian, Dr., D-83278 München (DE); Ertl, Harald, D-82538 Gelting (DE); Lerch, Rolf, D-68549 Ilvesheim (DE); Schlipfenbacher, Reiner, Dr., D-67098 Bad Dürkheim (DE); Angermaier, Ludwig, Dr., D-83673 Bichi (DE); Klein, Christian. Dr., D-82362 Weilheim (DE); Ritter, Josef, Dr., D-80339 München (DE)

(57) **Zusammenfassung**

Ein Adsorbermaterial zur Gewinnung und Anreicherung von gasförmigen und/oder partikelförmigen Spurenstoffen aus einem Luft- oder Gasstrom besteht aus faserförmigen Grundelementen aus natürlichen und/oder synthetischen, organischen, textilen Fasern, welche zu einem Vlies mit flächiger Geometrie verarbeitet werden, wobei das Vlies eine Dicke zwischen 100µm und 2mm sowie ein Flächengewicht zwiwchen 20 und 200 g/m₂ aufweist

## Beschreibung

Die Anreicherung und Gewinnung von Spurenstoffen aus der Gasphase ist eine Aufgabenstellung, die in vielen Anwendungsgebieten von Bedeutung ist. So ist es zum Beispiel bei der Bekämpfung der Drogenkriminalität notwendig, in der Gasphase frei vorhandene Drogenmoleküle bzw. partikelförmige oder an Partikel gebundene Drogen anzureichem, um diese mittels geeigneter Verfahren nachweisen zu können (BKA (ed.): Internationales Symposium Detektion von Rauschgift, Wiesbaden 1991). Auch z.B. bei der Arbeitsplatzüberwachung und in der Umweltanalytik treten entsprechende Problemstellungen auf.

Entsprechend dem Stand der Technik gibt es derzeit eine Reihe von Adsorbermaterialen, -vorrichtungen und -verfahren für diesen Zweck, die jedoch spezifische Nachteile aufweisen.

Allgemein bekannt sind röhrchenförmige Adsorptionsvorrichtungen, die mit Adsorbermaterialien wie z.B. Aktivkohle oder Silicagel befüllt sind (Fa. Dräger: Probenahme-Handbuch, 1. Ausgabe 1991). Nachteile hierbei sind die begrenzte Gasdurchlässigkeit (typischerweise im Bereich 200 bis 400 ml/min), das relativ große Volumen des Adsorberbettes, das große Elutionsvolumina erfordert, und die Tatsache, daß einige Stoffe (insbesondere schwer flüchtige Spurenstoffe, z.B. Cocain) sehr fest an diese Materialien binden und nur schwer wieder desorbierbar sind.

Zur Anreicherung mit nachfolgender thermischer Desorption werden ebenfalls röhrchenförmige Adsorbermodule eingesetzt, die z.B. mit Quarzglas befüllt sind (c.f. VDI-Richtlinie 3482). Auch hier sind nur vergleichsweise geringe Flußraten erreichbar und das Adsorberbett weist ein relative großes Volumen auf. Die Thermodesorption weist generell den weiteren Nachteil auf, daß der angereicherte Spurenstoff nach thermischer Desorption wiederum in der Gasphase vorliegt, was für nachfolgende Schritte, z.B. den Nachweis mittels immunologischer Verfahren, von Nachteil ist.

Ein weiteres bekanntes Verfahren ist die Anreicherung von Spurenstoffen aus der Gasphase in Glasgefäßen, die mit für das Lösen des anzureichernden Spurenstoffes geeigneten Flüssigkeiten gefüllt sind, wobei das Probengas durch die Flüssigkeit hindurchgeleitet wird (z.B. Impinger; cf. VDI-Richtlinie 3482). Hier ist es von Nachteil, daß relativ große Volumina an Lösungsmittel vorgelegt werden müssen, sodaß vergleichsweise große Gasvolumina gesammelt werden müssen, um zu nennenswerten Anreicherungsfaktoren in der Flüssigfalle zu kommen (im Normalfall > 1001). Die Verdunstung des Lösungsmittels wahrend des Probenahmevorganges stellt ein weiteres Problem bei dieser Art der Anreicherung dar.

Bekannt sind auch Kombinationsverfahren mit verschiedenen festen Adsorbermaterialien oder mit festen Adsorbermaterialien und Lösungsmittelfallen (Bundesanstalt für Arbeitsschutz(ed.) Empfohlene Analysenverfahren zur Arbeitsplatzmessung, 1991). Neben den oben bereits genannten Nachteilen ist hier insbesondere der hohe apparative Aufwand problematisch

Ein weiteres bekanntes Verfahren ist der Einsatz von Metallnetzen (z.B. Nickel, Gold), die ggf. zusätzlich mit organischen Phasen beschichtet sein können (Matz, G.: Rauschgift -Detektion mit dem mobilen Massenspektrometer. BKA-Symposium "Detektion von Rauschgift", Wiesbaden 1991: Fine D.H., et al.: Detection of Cocaine, Heroin and Methamphetamine by means of very high speed chromatography coupled to a chemiluminescence detector; ebenda). Derartige Adsorbermaterialien und -verfahren werden primär dann eingesetzt, wenn nachfolgend eine Analytik mittels Gaschromatographie und/oder Massenspektrometrie durchgeführt wird. Diese Materialien und Verfahren sind primär zur Anreicherung von partikelförmigen oder partikelgebundenen Spurenstoffen geeignet; über deren Eignung zur Adsorption gasförmig vorliegender Spurenstoffe ist nichts bekannt. Da diese Materialien vergleichsweise teuer sind, ist ihre Anwendung nur bei mehrmaligem Gebrauch sinnvoll; dies hat zur Folge, daß, bei analytischen Anwendungen, die Gefahr einer Überladung und damit der Verschleppung von Analyt besteht.

In der DE 41 21 493 A1 ist eine Vorrichtung zum Nachweis von Schadstoffen aus der Gasphase beschrieben, wobei der Nachweis mittels immunologischer Reaktionen durchgeführt wird und die zu untersuchende Gasphase durch einen membranartigen Träger diffundiert bzw. aktiv durchgesaugt wird. Ein Nachteil derartiger Adsorptionsmaterialien bzw. Verfahren ist die geringe Gasdurchlässigkeit solcher Membranen, wodurch hoher Zeitbedarf für die Probenahme und hoher apparativer Aufwand für die Erzeilung eines nennenswerten Gasstromes notwendig werden.

Auch in der JP 3-27 4460 wird ein membranförmiges Material zur Anreicherung von Spurenstoffen (in diesem Fall Methamphetamin) verwendet, das bei Porendurchmessern von 0,45µm und einer Membrandicke von 100µm über eine Flache von ca. 7cm² einen Gasstrom von 1l/min ermöglicht. Auch hier ist ein Nachteil, daß die Gasflußruten vergleichsweise gering sind und somit ein großer Zeitbedarf für die Probenahme praxisrelevanter Gasvolumina erforderlich ist.

Zaromb et al. (Journal of Chromatography 643, 107-115 (1993)) beschreiben eine Anreicherungsvorrichtung, die für große Gasvolumina tauglich ist (550 - 700l/min). Hierbei wird die anzureichernde Gasphase in einem Rohr, dem ständig ein wässriges, mit Zusätzen versehenes Adsorptionsmittel zugeführt wird, mit dem wässrigen Adsorptionsmittel in Kontakt gebracht und so eine Anreicherung von in der Gasphase vorhandenen Spurenstoffen in dem wässrigen Adsorptionsmittel erzielt. Die Autoren beschreiben Probenahmezeiten zwischen 10 und 60 Minuten, was Gesamtvolumina des beprobten Gases zwischen ca. 5000 und 42 000 l entspricht. Derart große Probengasvolumina weisen den Nachteil auf, für viele analytische Problemstellungen nicht mehr signifikant zu sein; so wird zum Beispiel bei der Untersuchung verdächtiger Gepäckstücke auf illegale Drogen bei derartig großen Probevolumina überweigend Umgebungsluft angesaugt, die für die Problemstellung keine Signifikanz mehr aufweist. Ein weiterer Nachteil des beschriebenen Verfahrens ist der hohe apparative Aufwand.

Zusammenfassend kann festgestellt werden, daß alle nach dem Stand der Technik bekannten Adsorbermaterialien oder -verfahren zur Gewinnung und Anreicherung von in der Gasphase vorhandenen Spurenstoffen einen oder mehrere der folgenden Nachteile aufweisen:
- hoher Zeitbedarf,
- hoher apparativer Aufwand,
- geringe Gasdurchlässigkeit
- sehr große Gasvolumina erforderlich,
- unsichere Eignung für gasförmige Spurenstoffe,
- Gefahr der Überladung und damit Stoffverschleppung,
- schlechte Eluierbarkeit der adsorbierten Spurenstoffe,
- relativ große Elutionsvolumina erforderlich.

Der vorliegenden Erfindung liegt somit die Aufgabe zugrunde, die beschriebenen Nachteile zu beseitigen. Dies gelingt durch ein nach Patentanspruch 1 ausgebildetes Adsorbermaterial. Die Fasern sind auf der Basis von Cellulose (Linters/Zellwolle/Viskose) und/oder aus Polymerisatfasern auf Basis von Polyester hergestellt, wobei für das Vlies ein organisches Bindemittel, das Hydroxyl- und/oder Estergruppen (Polyvinylalkohol, Epichlorhydrinharz) enthält, verwendet werden kann.

Bevorzugt werden als Cellulosefasern Zellwolle, Zellstoff und Linters eingesetzt. Als Zellwolle wird ein Material bezeichnet, das durch Alkalisieren von Cellulose zu Alkalicellulose, anschließende Behandlung mit Schwefelkohlenstoff unter Bildung von Cellulose-Xanthogenaten Auflösung der Cellulose-Xanthogenate in Luage und Verspinnen zu Viskosefilamentagarn erhalten wurde.
Zellstoff kann durch einen vollständigen chemischen Aufschluß cellulosehaltiger Materialien und anschließende Bleiche gewonnen werden.
Als Linters werden kurze, nicht spinnbare Baumwollfasern bezeichnet, die aus Baumwollsamen erhalten werden.

Die Cellulosefasern weisen bevorzugt eine Faserfeinheit von 1,7 bis 4,5 dtex auf und besitzen Längen von 3 - 12 mm.

Besonders bevorzugte Polyesterfasern sind Fasern mit einem spezifischen Gewicht von ca. 1,17 g/cm³, einer Schnittlänge von 3-6 mm und einer Faserfeinheit von 1,7 bis 3,3 dtex.

Als weiteren Bestandteil können die Vliese ein organisches Bindemittel, das OH-und/oder Estergruppen aufweist, enthalten. Bevorzugt werden hierzu Polyvinylalkohol und Epichlorhydrinharze eingesetzt. Der Polyvinylalkohol wird vorzugsweise als Fasermaterial mit einer Schnittlänge von 4mm und einem spezifischen Gewicht von 1,26 - 1,30 g/cm³ eingesetzt.

Aus diesen Komponenten und vollentsalztem Wasser wird ein Vlies auf einer Schrägsiebmaschine nach dem üblichen Verfahren der Papierherstellung erzeugt. Es sind keine weiteren Zusätze und Hilfsstoffe erforderlich.

Bevorzugte Ausführungsformen sind:
a) ein Vlies aus einer Mischung aus Zellwolle und Linters im Verhältnis 1 : 1 (im folgenden als VLS 352 bezeichnet) und
b) ein Vlies bestehend aus 80 Teilen Polyesterfasen und 20 Teilen Zellwolle (im folgenden als VLS 317 bezeichnet).

Die Vliese zeichnen sich bei einer Dicke zwischen 100µ und 2mn sowie einem Flächengewicht zwischen 20 und 200 g/m² dadurch aus, daß gegenüber herkömmlichen Filterpapieren deutlich höhere Gasdurchlässigkeitswerte bei gleichzeitig gutem Adsorptionsverhalten erzielt werden. Bei der Prüfung der Gasdurchlässigkeit werden 400cm³ Luft pro Sekunde durch eine Prüffläche von 10 cm² geblasen und der Luftwiderstand in mbar gemessen. Bei VLS 352 resultieren hierbei 4,5 mbar, bei VLS 317 1.0 mbar. Herkömmliche Filterpapiere ergeben deutlich höhere Werte von etwa 16,0 mbar.

Mit Hilfe einer anderen Untersuchungsmethode wurden auch Vergleichsmessungen mit membranartigen Adsorbermaterialien, wie sie in der JP 3-27 4460 beschrieben sind, durchgeführt. Hierbei werden mittels einer Vakuumpumpe Volumenströme im Bereich 1 bis 10 l pro Minute und cm² Adsorbermaterial erzeugt und der hierbei enstehende Druckabfall über dem Adsorbermaterial in mbar bestimmt. Die Ergebnisse dieser Versuchsreihe sind in der folgenden Tabelle dargestellt:

| Material | Volumenstrom (l min⁻¹cm⁻²) | Druckabfall (mbar) |
|---|---|---|
| VLS 352 | 6 | 160 |
| " " | 7,4 | 280 |
| VLS 317 | 6 | 160 |
| " " | 7,4 | 285 |

Man erkennt, daß bei den erfindungsgemäßen Adsorbervliesen bei vergleichsweise hohen Volumentsrömen noch relativ geringen Druckabfalle auftreten. Bei membranartigen Vergleichsproben sind bereits bei sehr geringen Volumenströmen deutlich höhere Druckabfälle zu verzeichnen.

Die erfindungsgemäßen vliesförmigen Adsorbermaterialien werden in einer geeigneten Halterung derart befestigt, daß freier Zutritt des die zu adsorbierenden Spurenstoffe enthaltenden Probengases zu dem Adsorbervlies ermöglicht wird. Die Oberflächen der Halterung des Adsorbermateriales, die vor dem eigentlichen Adsorbermaterial mit dem Probengas in Berührung kommen, sind hierbei möglichst klein auszulegen, um unerwünschte Adsorptionen an diesen Oberflächen zu verhindern. Normalerweise werden Flächen des vliesförmigen Adsorbermateriales zwischen 0.1 und 100 cm², bevorzugt zwischen 0,5 und 20 cm² und besonders bevorzugt zwischen 1 und 5 cm² gewählt. Du Probengas, des den zu adsorbierenden Spurenstoff oder die zu adsorbierenden Spurenstoffenn enthält, wird nun durch des vliesförmige Adsorbermaterial befördert, wobei der/die anzureichernden Spurenstoff(e) auf dem vliesförmigen Adsorbermaterial adsorbiert werden. Die Einstellung des Gasstromes erfolgt hierbei vorzugsweise mittels einer regelbaren Vakuumpumpe, die hinter der Haltenung mit dem Adsorbermaterial angeordnet ist. Zweckmäßig werden Flußraten zwischen 1 ml/min und 100l/min. bevorzugt zwischen 100ml/min und 20l/min und besonders bevorzugt zwischen 500ml/min und 10l/min eingestellt. Zur nachfolgenden Gewinnung und Weiterverwendung des/der aus der Gasphase angereicherten Spurenstoffe(s), z.B. für analytische Zwecke, werden diese aus dem Adsorbermaterial mittels geeigneter Lösungsmittel eluiert bzw. ggf. auch thermische desorbiert. Als Elutionsmittel kommen sowohl wässrige Lösungen, wie z.B. in Wasser gelöste Puffersubstanzen, denen auch weitere Zusätze wie z.B. Detergenzien zugesetzt sein können, als auch organische Lösungmittel in Frage. Die Elution des/der angereicherten Spurenstoffe(s) kann sowohl in Form einer Chromatographie erfolgen, d.h., daß das verwendete Elutionsmittel aufgrund von Kapillarkräften durch das Adsorbermaterial hindurchtritt, als auch mittels aktiver Durchspülung des Adsorbermaterials, zum Beispiel mit Hilfe einer Flüssigkeitspumpe. Zweckmäßig werden hierbei Elutionsmittelvolumina zwischen 1µl und 1000ml, bevorzugt zwischen 10µl und 10ml und besonders bevorzugt zwischen 50µl und 1ml eingesetzt.

Zusammenfassend zeichnen sich die erfindungsgemäßen Adsorbermaterialien dadurch aus, daß mit vergleichsweise geringen apparativen Aufwand und bei vergleichsweise geringem Druckabfall über dem Adsorbermaterial, der bei den beschriebenen Flußraten typischerweise zwischen 50 und 500 mbar liegt, und bei vergleichsweise geringen Abmessungen des Adsorbermaterials, Flußraten des Probengases erzielt werden können, die einen für viele, insbesondere analytische, Anwendungen relevanten Bereich abdecken. Desweiteren zeichnen sich die erfindungsgemäßen Adsorbermaterialien dadurch aus, daß, wiederum bei vergleichsweise geringen Abmessungen des Adsorbermaterials, insbesondere bei vergleichsweise geringer Dicke des Vlies, und gleichzeitig vergleichsweise geringer Dicke des Vlies, und gleichzeitig vergleichsweise hohen Durchflußraten des Probengases, eine quantitative, d.h. nahezu vollstandige Rückhaltung sowohl von gasförmig vorliegenden als auch von partikelförmig vorliegenden bzw. an Partikel gebundenen Spurenstoffen erfolgt. Ein weiterer Vorteil der erfindungsgemäßen Adsorbermaterialien ist dadurch gegeben, daß die angereicherten Spurenstoffe mit vergleichsweise einfachen und auch für z.B. nachfolgende immunologische Nachweisverfahren gut verträglichen Lösungsmitteln, wie z.B. Puffern, wieder nahezu quantitativ eluiert werden können. Aufgrund der geringen Abmessungen der Adsorbermaterialien können für die Elution vergleichsweise geringe Elutionsmittelvolumina eingesetzt werden, was einen weiteren Vorteil darstellt, insbesondere hinsichtlich des erzielbaren Anreicherungsfaktors. Schließlich können die erfindungsgemäßen Adsorbermaterialien aufgrund ihres vergleichsweise geringen Preises Anwendung in Adsorbermodulen für einmaligen Gebrauch finden, wodurch keine Verschleppungsprobleme zwischen einzelnen Probenahmen auftreten, was insbesondere bei analytischen Anwendungen von Vorteil ist.

Im folgenden wird die Erfindung anhand von Ausführungsbeispielen naher erläutert.

### Ausführungsbeispiel 1: Anreichung von gasformig vorliegendem Cocain bei Sättigungskonzentration

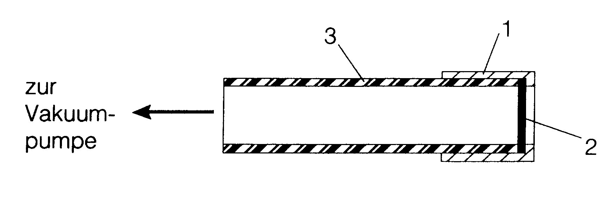

Es wurde ein Vlies hergestellt, das aus 80 Teilen Polyesterfasern einer Faserfeinheit von 3,3 dtex und einer Faserlänge von 4mm, 20 Teilen Zellwolle mit einer Faserfeinheit von 1,7 dtex und einer Schnittlänge von 3mm sowie 20 Teilen Polyvinylalkoholfasern einer Schnittlänge von 4 mm besteht Die Faserstoffe Polyester, Zellwolle und Polyvinylalkohol wurden mit vollentsalztem Wasser bei einer Stoffdichte von 0,3% in Mischbütten aufgeschlagen und vereinzelt. Der Faserstoff wurde anschließend auf ein umlaufendes Sieb gepumpt. Während das Fasergemisch entwässert bzw. das Wasser durch Vakuum abgesaugt wird, orientieren sich die Fasern auf der Siebseite und werden als Vlies mit einem Trockengehalt von ca. 20% über Trockenzylinder kontaktgetrocknet. Das Flächengewicht eines derart hergestellten Adsorbervlieses beträgt 80 g/m², die Dicke liegt bei 320 µm.
Hieraus werden runde Scheiben von 14mm⌀ gestanzt, die in eine Halterung gemäß Fig 1. eingesetzt werden. Diese besteht im wesentlichen aus einer zylindrischen Halterung 1, mittels welcher das Vlies 2 gegen die Stirnfläche eines Kunststoffrohres 3 eingeklemmt ist. Das rückseitige Ende des Kunststoffrohres ist mit einer Vakuumpumpe verbunden.

Die Bereitstellung der Cocaingasphase erfolgt mittels eines Prüfgasstandes, in dem Stickstoffgas bei gegebener Temperatur durch einen ebenfalls temperierten Bodenkörper von festem Cocain (freie Base) hindurchgeleitet wird. Die gesamte Gasführung des Prüfgasstandes erfolgt unter isothermen Bedingungen, um eine gleichbleibende Gasqualität sicherzustellen. Das Vorliegen einer gleichbleibenden Gasqualität am Ausgang des Prüfgasstandes wird mittels apparativer Referenzanalytik (Einleiten des Prüfgases in mehrere hintereinader geschaltete Lösungsmittelfallen, Analytik mittels Gaschromatograph bzw. Massenspektrometer, kurz: GC/MS) ermittelt.Bei einer Temperatur von 20°C kann mit dem beschriebenen Prüfgasstand eine Cocainkonzentration von ca. 2ng/l reproduzierbar hergestellt werden, was der theoretisch zu erwartenden Sättigungskonzentration von Cocain für diese Temperatur (Lawrence et al., Can. J Chem. 62, 1984) entspricht.

Die Halterung mit dem eingesetzten Adsorbermaterial wird mit einer Durchflußgeregelten Vakuumpumpe verbunden. Es wird ein Durchfluß von 5l/min eingestellt, wobei dieser mittels eins in die Gasführung eingesetzten Durchflußmessers (Rotameter) zusätzlich kontrolliert wird. Hierbei stellt sich ein Druckabfall über dem Adsorbermaterial von ca 140 mbar ein. Mit der eingestellten Flußrate wird das Adsorbermaterial 2 min lang am Ausgang des Prüfgasstandes mit der gesättigten Cocaingasphase beaufschlagt. Die Gesamtbeaufschlagungsmenge entspricht somit ca. 20ng Cocain/Adsorbervlies Anschließend wird das Adsorbermaterial mit einer Pinzette aus der Halterung entnommen und in ein Eppendorf-Reaktionsgefäß überführt. Hierin erfolgt Elution des Vlieses mit 200µl eines Gemisches aus Cyclohexan und Ethanol (1:1). Im Eluat wird mittels GC/MS die Cocainmenge quantitativ bestimmt Es werden jeweils mindestens 5 Parallelproben je Versuchsreihe gezogen.

Bei einer parallel angelegten Versuchsreihe erfolgt die Elution mittels wässrigem Puffer (50mmol/l HEPES, 0,9 % NaCl, 0,05 % Tween 20, pH 6,8). Die Bestimmung der Cocainmenge im Eluat wird hier mittels eines Cocain-spezifischen ELISA durchgeführt.

Die Einzelergebnisse sind in der folgenden Tabelle angegeben;
a) Elution mit Cyclohexan/Ethanol, Analytik mit GC/MS

| Probe | ng Cocain gesamt/Adsorbervlies |
|---|---|
| 1 | 18,2 |
| 2 | 22,1 |
| 3 | 20,9 |
| 4 | 19,0 |
| 5 | 18,8 |

b) Elution mit Puffer, Analytik mit ELISA

| Probe | ng Cocain gesamt/Adsorbervlies |
|---|---|
| 1 | 19,8 |
| 2 | 19,3 |
| 3 | 20,9 |
| 4 | 19,4 |
| 5 | 21,2 |

Die Ergebnisse zeigen, daß bei einer der Sättigung entsprechenden Konzentration von Cocain in der Gasphase sowohl quantitative Rückhaltung des gasförmig vorhandenen Cocains auf dem Adsorbervlies als auch quantitative Eluierbarkeit aus dem Adsorbervlies mittels wässriger Pufferlösung gegeben sind.

### Ausführungsbeispiel 2: Anreicherung von gasformig vorliegendem Cocain bei Konzentrationen unterhalb der Sättigungskonzentration

Wie im Beispiel 1 beschrieben, wurde ein Adsorbervlies hergestellt, daß die folgende Zusammensetzung hatte:

| | |
|---|---|
| Zellwolle: Faserfeinheit 1,7 dtex, Schnittlänge 3mm | 50 Teile |
| Linters: Typ 3386, Fa. Temming | 50 Teile |
| Epichlorhydrinharz (12,5% Feststoff) | 3 Teile |

Ein derart hergestelltes Vlies weist ein Flächengewicht von 100 g/m² bei einer Dicke von ca. 400µm auf.

Als Probengas wird hier eine mit Stickstoff in einer zusätzlichen Verdünungsstrecke hergestellte Verdünnung des wie im Ausführungsbeispiel 1 beschriebene Probengases verwendet. Die Kontrolle der tatsächlich vorliegenden Cocainkonzentrationen in den jeweiligen verdünnten Gasphasen erfolgt durch Beaufschlagung von mit Quarzglas befüllten Adsorberröhrchen mit einer definierten Menge des Probengases, thermischer Desorption des adsortierten Cocains in einer Thermodesorptionseinheit und quantitativer Analytik mittels unmittelbar gekoppelter GC/MS. Es werden Verdünnungen eingestellt, die 10% (entsprechend 200pg/l) bzw. 1% (entsprechend 20pg/l) der Sättigungskonzentration von Cocain bei 20°C entsprechen. Die Elution der beaufschlagten Filter erfolgt ausschließlich mit Elutionspuffer, der Nachweis der Cocainmenge im Eluat ausschließlich mittels des Cocain-spezeifischen ELISA.

Alle anderen Bedingungen sind wie im Ausführungsbeispiel 1 beschrieben.

Ergebnis: Die Wiederfindung liegt bei 2 (± 0,2) ng absolut pro Adsorbervlies bei Beaufschlagung mit 10l einer Cocaingasphase mit einer Cocainkonzentration von 200pg/l bzw. bei 200 (± 35) pg absolut pro Adsorbervlies bei Beaufschlagung mit 10l einer Cocaingasphase mit einer Cocainkonzentration von 20pg/l.

Das Ergebnis zeigt, daß auch sehr niedrige Absolutmengen von Cocain, wie sie bei Cocainkonzentrationen in der Gasphase weit unterhalb der Sättigungskonzentration vorliegen, reproduzierbar auf dem vliesförmigen Adsorber zurückgehalten werden und deren quantitative Elution mittels wässriger Pufferlösung möglich ist.

### Ausführungsbeispiel 3: Rückhaltung von partikelförmig vorliegendum Cocain

Vliesförmiger Adsorber, Halterung, Flußraten Elution und Analytik entsprechen dem Ausführungsbeispiel 2. Im Gegensatz zu Beispiel 2 wird der vliesförmige Adsorber jedoch nicht mit Probengas aus einem Prüfgasstand beaufschlagt, sondern die Probenahme erfolgt in 1cm Abstand über einer Polyethylenoberfläche, die zuvor mit einem pulverförmigen Gemisch aus 1 Teil Cocain auf 1000 Teile Lactose kontaminiert wird, wobei 5 mg dieses Gemisches auf einem Oberflächenareal von 200 cm² verteilt werden. Während der Probenahme wird die Oberfläche zusätzlich mit einem Preßluftstrom von 5l/min aus einer Düse mit ca. 1 mm⌀ aus einem Abstand von ca. 1 cm angeblasen, um die Ablösung der partikulären Kontamination zu unterstützen.

Ergebnis: Auf allen derart beaufschlagten Filtern sind Absolutmengen > 20ng Cocain nachweisbar.

Das Ergebnis zeigt, das auch partikelförmig in der Gasphase vorhandenes Cocain von dem erfindungsgemäßen vliesförmigen Adsorber zurückgehalten wird.

## Patentansprüche

1. Adsorbermaterial zur Gewinnung und Anreicherung von gasförmigen und/oder partikelförmigen Spurenstoffen aus einem Luft- oder Gasstrom, **dadurch gekennzeichnet**, daß das Adsorbermaterial aus fäserförmigen Grundelementen aus natürlichen und/oder synthetischen, organischen, textilen Fasern besteht, welche zu einem Vlies mit flächiger Geometrie verarbeitet werden, wobei das Vlies eine Dicke zwischen 100µm und 2mm sowie ein Flächengewicht zwischen 20 und 200 g/m² aufweist.

2. Adsorbermaterial nach Anspruch 1 **dadurch gekennzeichnet**, daß die Fasern eine Faserfeinheit zwischen 1 und 10 dtex aufweisen.

3. Adsorbermaterial nach Anspruch 1 oder 2, **dadurch gekennzeichnet**, daß die Fasern aus Cellulose und/oder Polyester bestehen.

4. Adsorbermaterial nach einem der Ansprüche 1 bis 3, **dadurch gekennzeichnet**, daß die Fasern in dem Vlies mit einem Bindemittel und/oder einem Naßverfestiger versehen sind.

5. Adsorbermaterial nach einem der Anspruch 1 bis 4, **dadurch gekennzeichnet**, daß das Vlies aus einem Fasergemisch von 80 Teilen Polyesterfasern, 20 Teilen Zellwolle und 20 Teilen Polyvinylalkoholfasern besteht.

6. Adsorbermaterial nach einem der Anspruch 1 bis 4, **dadurch gekennzeichnet**, daß das Vlies aus einem Fasergemisch von 50 Teilen Zellwolle und 50 Teilen Linters besteht, welch mit Epichlorhydrinharz als Bindemittel versehen sind.
